# EUROPEAN PATENT SPECIFICATION

(11) **EP 1 380 950 B1**
(45) Date of publication and mention of the grant of the patent: **08.02.2006**
(21) Application number: 03015794.5
(22) Date of filing: 10.07.2003
(51) Int. Cl.: G06F 11/16

(54) **Fault tolerant information processing apparatus**
Fehlertolerante Vorrichtung zur Informationsverarbeitung
Appareil de traitement d'information à tolérance de fautes

(30) Priority: 10.07.2002 JP 2002201796
(43) Date of publication of application: 14.01.2004
(73) Proprietor: NEC CORPORATION, Tokyo (JP)
(72) Inventor: Aino, Shigeyuki, Minato-ku, Tokyo (JP); Yamazaki, Shigeo, Minato-ku, Tokyo (JP)
(74) Representative: Betten & Resch

(56) References cited:
- EP-A- 0 817 053
- EP-A- 0 974 912
- US-A- 5 778 206
- US-A1- 2002 065 996
- US-B1- 6 260 159

## Description

### BACKGROUND OF THE INVENTION

The present invention relates to an information processing apparatus, such as a lockstep fault tolerant computer, that simultaneously processes the same instructions in a plurality of clock-synchronized computer modules therein, and more particularly, to an information processing apparatus that speedily synchronizes a computer module, which has been out of synchronism with the other computer modules and isolated from the operation, with other computer modules.

A conventional lockstep fault tolerant computer has a plurality of computer modules which simultaneously execute the same instructions. In the fault tolerant computer, one of the computer modules may operate differently from the other computer modules because of a failure or some other causes. Upon detecting a computer module that operates differently from the other computer modules, in other words, on finding a computer module which is out of lockstep synchronism, the lockstep fault tolerant computer once puts the detected computer module out of the operation.

Causes which make the computer module be out of the lockstep synchronism vary. A course of reaction to be taken for the computer module, which is out of the lockstep synchronism, depends on the cause. One of the causes, which makes the computer module be out of the lockstep synchronism, may be a permanent failure that occurs within the computer module. The permanent failure is not a temporary disturbance or a failure that recovers by the computer module itself, but a failure requiring repairs. A computermodule, in which a permanent failure occurs, is usually taken out of the lockstep fault tolerant computer and, instead of that module, another healthy computer module is installed.

Another potential cause, which makes the computer module be out of the lockstep synchronism, may be a lack of synchronism that the operation timing does not synchronize temporarily with the other computer modules because of manufacturing variations of the computer modules. Yet another potential cause may be temporary malfunction of a memory in the computermodule affected by an influence such as an α ray. In those causes like a lack of synchronism or temporary malfunction, which does not cause a permanent failure, the computer module need not be replaced.

If the permanent failure occurs, the faulty computer module is replaced and the replaced computer module is joined to and synchronized with the other computer modules. If there is no permanent failure, the computer module is rejoined to and resynchronized with the other computer modules. The operation to make a disconnected computer module rejoin the other computer modules is a resynchronization. When the conventional lockstep fault tolerant computer resynchronizes with the computer module which was out of the lockstep synchronism, the conventional lockstep fault tolerant computer copies a memory of the computer module, which is to be rejoined, from a memory of another computer module which is in the lockstep synchronism. The rejoined computer module thereafter executes the same operations with the other computer modules.

A conventional lockstep fault tolerant computer forces all computing modules stop and copies the whole contents of memory of the joined or rejoined computer module from another computer module being in the lockstep synchronism when joining or rejoining the computing module. This allows all the computing modules to have completely the same internal state. A conventional lockstep fault tolerant computer is forced to stop long time to join or rejoin the computer module. This is because it takes a long time to copy the whole contents of the memory in the computer module. Especially, as memory size in the computer module increases, time to copy the whole content of the memory in the computer module increases.

In EP-A-0 817 053, a memory management system for a fault tolerant computer system is disclosed which includes a first recording mechanism which can be activated to record memory update events, a second recording mechanism having a capacity to record at least a limited number of memory update events, a fault input for a fault signal to activate the first recording mechanism in the event of a fault event and a memory reintegration mechanism to reintegrate at least parts of memory identified in the first and second recording mechanisms. The recording of memory updates is done on a page basis using a dirty RAM and secondary dirty page record.

In US-A-2002/0065996, a computer system is disclosed which comprises at least two processing sets including main memory. The processing sets are connected by a bridge and a first processing set includes a dirty memory having dirty indicators for indicating dirtied blocks of the main memory of the first processing set. The bridge includes a direct memory access controller that is operable to copy blocks of a first processing set indicated in the dirty memory to the main memory of another processing set.

### BRIEF SUMMARY OF THE INVENTION

An object of the present invention is to provide an information processing apparatus that ameliorates availability. The invention is defined by the claims.

Another object of the invention is to provide an information processing apparatus that quickly resumeroperation after the detection of a failure.

### BRIEF DESCRIPTION OF THE DRAWINGS

Other features and advantages of the invention will be made more apparent by the following detailed description and the accompanying drawings, wherein:
Fig. 1 is a block diagram showing a embodiment of the present invention; and
Fig.2 is a diagram showing an example of operation of the present invention.

In the drawings, the same reference numerals represent the same structural elements.

### DETAILED DESCRIPTION OF THE PREFERRED EMBODIMENTS

As described in the prior art, a cause that puts a computer module out of lockstep synchronism is a permanent failure or a non-permanent failure. In a fault tolerant computer, a computer module in which the permanent failure is occurred must be replaced. On the other hand, if a computer module that is out of the lockstep synchronism because of a non-permanent failure, it is usually not replaced but rejoined unchanged. Namely, in considerable cases, a computer module which is out of the lockstep synchronism is not replaced but installed unchanged. There may be a difference between data stored in a memory of the computer module, which is out of the lockstep synchronism, and data stored in a memory of the computer module, which is in the lockstep synchronism, while the memories of the computer modules will store the same data if no failure is detected. In many cases, the difference is a little or limited.

An embodiment of the present invention will be described in detail below.

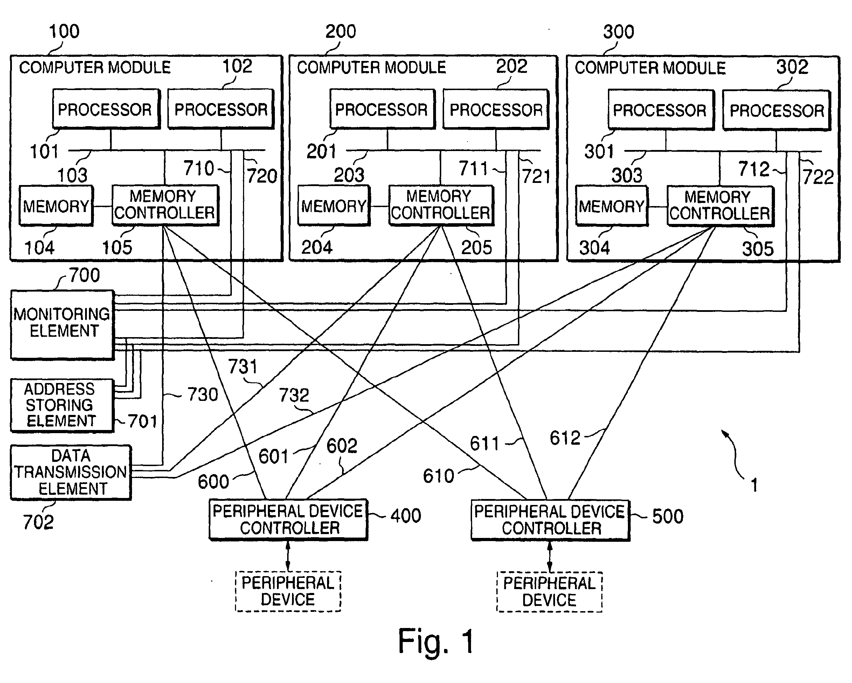

Referring to Fig.1, an information processing apparatus includes computer modules 100, 200 and 300, peripheral device controllers 400 and 500, a monitoring element 700, an address storing element 701 and a data transmission element 702. In this embodiment, the information processing apparatus is a lockstep fault tolerant computer.

Computer module 100 includes processors 101 and 102, a bus 103, a memory 104 and a memory controller 105. Processors 101 and 102 have the same or an equivalent configuration and are connected to the same bus 103. Memory controller 105 is connected to bus 103. Processors 101 and 102 are connected to memory controller 105 via bus 103. Memory 104 is connected to memory controller 105. Memory controller 105 is connected to data transmission element 702 via a signal line 730. Memory controller 105 is connected to peripheral device controller 400 via a signal line 600 and peripheral device controller 500 via a signal line 610.

Every computer modules 100, 200 and 300 has the same or an equivalent configuration or structure. Specifically, computer module 200 includes processors 201 and 202, a bus 203, a memory 204 and a memory controller 205. Processors 201 and 202 are connected to the same bus 203. Memory controller 205 is connected to data transmission element 702 via a signal line 731. Memory controller 205 is connected to peripheral device controller 400 via a signal line 601 and peripheral device controller 500 via a signal line 611. Computer module 300 includes processors 301 and 302, a bus 303, a memory 304 and a memory controller 305. Processors 301 and 302 are connected to the same bus 303. Memory controller 305 is connected to data transmission element 702 via a signal line 732. Memory controller 305 is connected to peripheral device controller 400 via a signal line 602 and peripheral device controller 500 via a signal line 612.

Next, an embodiment of the present invention will be described in more detail below. For concise explanation, the description is focused on computer module 100.

Processors 101 and 102 execute instructions instructed by the lockstep fault tolerant computer 1. The instruction execution by processors 101 and 102 is substantially synchronized with that by the processors of computer modules 200 and 300 based on an identical or substantially the same clock signal, and processors 101 and 102 execute the same or substantially the same instructions substantially simultaneously with the processors of computer modules 200 and 300. The source of the clock signal is provided commonly for the all computer modules 100, 200 and 300, or the sources of the clock signals, which are synchronized, are provided for computer modules 100, 200 and 300, respectively. Namely, computer modules 100, 200 and 300 execute in the instructions "lockstep" synchronism in which every computer modules 100, 200 and 300 execute a substantial identical instruction stream substantially simultaneously. During the instruction execution, processors 101 and 102 write data into or read data from memory 104. Processors 101 and 102, which is synchronized with the processors of computer modules 200 and 300 based on the clock signal, accesses a peripheral device or peripheral devices. Specifically, processors 101 and 102 access the peripheral device connected to peripheral device controller 400 via bus 103, memory control element 105 and signal line 600. Processors 101 and 102 access the peripheral device connected toperipheral device controller 500 via bus 103, memory control element 105 and signal line 610. When processors 101 and 102 receive an interrupt, which is a stop direction, from monitoring element 700, processors 101 and 102 write context of a process or processes, which is or are executed at the time when the interrupt is received, into the predetermined area of the memory and stop their operation. If processors 101 and 102 stop their operation because of the stop direction arisen from their own reason that they are out of the lockstep synchronism, processors 101 and 102 execute hardware diagnosis afterward. The hardware diagnosis is an execution to diagnose the hardware of computer modules 100whether or not there is any failure.

Memory controller 105 sends access requests, which are the write access requests and/or the read access requests received from processors 101 and/or 102, to memory 104. Memory controller 105 sends responses from memory 104 to processors 101 and 102. The request is send from processors 101 and 102 to memory 104 when the access request is the write access request or the read access request. The write access request includes write data. The response is send from memory 104 to processors 101 and 102 when the request is the read access request. The response includes read data. The memory controller 105 sends access requests, which came from processors 101 and/or 102 and are addressed to at least one peripheral device, to peripheral device controllers 400 and 500. The memory controller 105 sends access requests, which are received from data transmission element 702 via signal line 730, to memory 104. For example, the access received from data transmission element 702 is to execute direct memory access (DMA) transmission. In the DMA transmission, memory 104 is either an origin of the transmission or a destination of the transmission.

Peripheral device controllers 400 and 500 monitor whether or not access requests to the peripheral device received from all of computer modules 100, 200 and 300 differ from each other. If none of the access requests received from all of computer modules 100, 200 and 300 differs, each of peripheral device controllers 400 and 500 sends a single access request out of the access requests to the corresponding peripheral device. If any of the access requests received from all of computer modules 100, 200 and 300 differs from the others, each of peripheral device controllers 900 and 500, for example, discards these access requests or sends a single access request, which is determined by majority decision rule, to the corresponding peripheral device. When the access request addressing to the peripheral device is the read access request, each of peripheral device controllers 400 and 500 send a response, which include data read out from the corresponding peripheral device, to all of the computer modules 100, 200 and 300 simultaneously.

In this embodiment, monitoring element 700 is connected to a bus which is directly connected to processors 101 and 102. This accelerates the detection by monitoring element 700, which is to find which of computer modules 100, 200 and 300 is out of the lockstep synchronism. Monitoring element 700 is connected to bus 103 of computer module 100 through signal lines 710 and 720. In the access request from processors 101 and 102 to memory 104 or the peripheral device, signal line 710 distributes an address strobe, which indicates the time when the address is output, from bus 103 to monitoring element 700. In the access request from processors 101 and 102 to memory 104 or the peripheral device, signal line 720 distributes a command and an address from bus 103 to monitoring element 700. The command includes, for example, a write access command or a read access command. Monitoring element 700 is connected to bus 203 of computer module 200 through signal lines 711 and 721 and is connected to bus 303 of computer module 300 through signal lines 712 and 722.

Monitoring element 700 finds which of computer modules 100, 200 and 300 is out of the lockstep synchronism. Monitoring element 700 monitors the consistency of the access requests from computer modules 100, 200 and 300 on the basis of the address strobes received via signal lines 710, 711 and 712 and the commands and the addresses received via signal lines 720, 721 and 722. When monitoring element 700 detects the inconsistency of the access requests from computer modules 100, 200 and 300, monitoring element 700 notifies address storing element 701 that there is the inconsistency of the access requests between computer modules 100, 200 and 300 and which one is the inconsistent computer module. The computer module whose access request is inconsistent with the other computer modules is determined to be out of the "lockstep" synchronism. When monitoring element 700 detects the inconsistency, monitoring element 700 notifies the processors of all computer modules 100, 200 and 300 of a stop direction, which is in fact an interruption to the processors of computer modules 100, 200 and 300. On receiving the stop direction, each processor writes context of a process or processes prosecuted at the time of the interruption into the predetermined location of the memory, and then halts. In an example of monitoring the consistency of the access requests between computer modules 100, 200 and 300, monitoring element 700 detects the consistency or the inconsistency of the access requests when monitoring element 700 receives the address strobes from every computer modules 100, 200 and 300 during the same cycle, and the commands and the addresses at this cycle are the same between computer modules 100, 200 and 300. If an address of an access request from computer module 100 is different from addresses of access requests from computer modules 200 and 300 during a certain cycle, computer module 100 is found to be out of lockstep synchronism, in other words inconsistent. In another example, which is a simplified example, monitoring element 700 receives only the address strobes from all computer modules 100, 200 and 300, and determines the consistency or the inconsistency of the access requests when the address strobes from computer modules 100, 200 and 300 are received during the same cycle.

Address storing element 701 has a buffer which stores an address or addresses corresponding to the data, which is stored in the memory of the computer module being in the lockstep synchronism and which differ from the data stored in the memory of the computer modules being out of the lockstep synchronism. Address storing element 701 stores an address or addresses directed by the access request in which the inconsistency is detected and the write access requests afterwards by computer modules 100, 200 and 300, since monitoring element 700 notifies address storing element 701 of the inconsistency of the access request and the inconsistent computer module.

Data transmission element 702 interrogates an error indicator flag and a hardware diagnosis result, when all processors of computer modules 100, 200 and 300 halt and a hardware diagnosis afterward is completed. The error indicator flag is a flag which indicates that an error occurred in the computer module. If a permanent failure occurred in the computer module, data transmission element 702 is able to find it out based on the error indicator flag and the hardware diagnosis result. The permanent failure is not a temporary disturbance or a failure that recovers by itself, but a failure requiring repairs. Data transmission element 702 executes a resynchronization if no permanent failure is occurred in the computer module. The resynchronization includes execution to conform memory contents of the computer module being out of the lockstep synchronism to the memory contents of the other computer modules which are in lockstep synchronism. In the resynchronization, if the computer module has a cache, specifically, if the processors have a cache, cache flash operations are executed in the computer module which is in lockstep synchronism. A cache flash operation may be executed only in a single computer module which is in lockstep synchronism. By the cache flash operations, the data in the cache is written out to the memory. An address or addresses, which correspond to the data from the cache written to the memory, are stored in address storing element 701. After the completion of the cache flash, data transmission element 702 copies the data, which corresponds to the address or the addresses stored in address storing element 701, of the memory of the computer module being out of lockstep synchronism from the memory of the computer module being in lockstep synchronism. Namely, the data, which is designated by the address or the addresses stored in address storing element 701 and which is stored in the memory of the computer module being in lockstep synchronism, is copied to the memory of the computer module which is out of lockstep synchronism. In this copy operation, a direct memory access (DMA) transmission may be utilized.

After data transmission element 702 completes the copy operation, data transmission element 702 resets all computer modules 100, 200 and 300 and makes them resume the executions. All computer modules 100, 200 and 300 start ordinary execution. All processors in computer modules 100, 200 and 300 use the context stored in the predetermined memory area of the computer module to start ordinary execution.

In the above described embodiment, signal lines 710 and 720, which are derived from bus 103, are used to transmit the access request addressing to memory 104 from processors 101 and 102 to monitoring element 700 and address storing element 701. In a restricted case, the present invention may be modified. For example, this modification is to use signal lines derived from the line, which connects memory controller 105 and memory 104, to transmit the access request from processors 101 and 102 to monitoring element 700 and address storing element 701.

Next, the operation of this embodiment will be described.

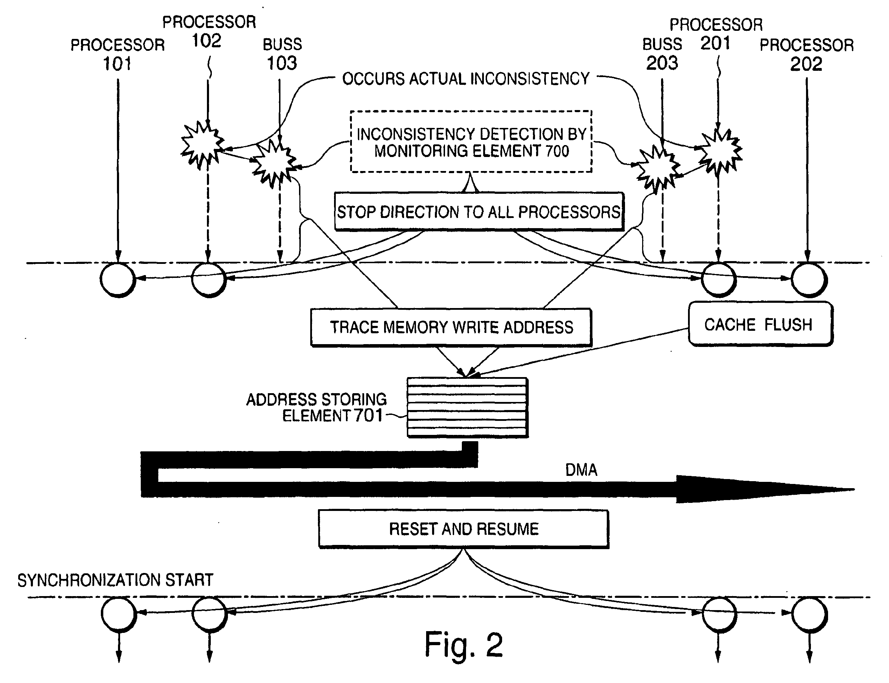

Referring to Figs. 1 and 2, computer modules 100, 200 and 300 ordinarily execute operations in the lockstep synchronism. Namely, computer modules 100, 200 and 300 ordinarily execute the same instructions substantially simultaneously based on an identical or substantially the same clock signal. The processors of computer modules 100, 200 and 300 access the memory and the peripheral device in accordance with the instructions. Monitoring element 700 monitors every access from computer modules 100, 200 and 300. Specifically, monitoring element 700 watches the time, the command and the address of the access requests in the same cycle whether they are consistent between computer modules 100, 200 and 300.

Assuming that computer module 100 is disturbed and thus the access request from computer module 100 is inconsistent with the access requests from the other computer module 200 and 300 but no permanent failure occurred in computer module 100, monitoring element 700 detects the inconsistency. On detecting the inconsistency, monitoring element 700 determines which computer modules 100, 200 and 300 is out of lockstep synchronism. In this embodiment, monitoring element 700 determines that computer module 100 is out of lockstep synchronism. Monitoring element 700 notifies address storing element 701 of the access inconsistency and the computer module being out of the lockstep synchronism, in this embodiment, computer module 100. Monitoring element 700 notifies all the processors in computer modules 100, 200 and 300 of the stop direction by interruption.

When address storing element 701 is notified of the access inconsistency and the computer module 100 being out of the lockstep synchronism, address storing element 701 records the addresses of the inconsistent access request and the write access requests thereafter from each of computer modules 100, 200 and 300.

The processor, which is notified of the stop direction, writes a context of an ongoing process or ongoing processes to the predetermined area of the memory and then halts. The hardware diagnosis is executed on the computer module whose access is inconsistent with the other computer module. In this example, the hardware diagnosis is executed on computer module 100. After the completion of the hardware diagnosis, data transmission element 702 interrogates the error indicator and the hardware diagnosis result. Since no permanent failure is occurred in computer module 100 in this embodiment, data transmission element 702 executes the resynchronization.

In the resynchronization, if any computer module being in lockstep synchronism has the cache, the cache flash is executed. The cache flash is executed in, for example, computer module 200. In this embodiment, cache flash is to read out the whole contents of the cache to an area of the memory of the computer module. The cache flash makes the data in the cache be written out to the memory. This writte operation to the memory is executed by the write access, and the address whose data is written out is stored in address storing element 701.

Data transmission element 702 copies the data, which corresponds to the address or the addresses stored in address storing element 701 only and which is stored in the memory of one of the other computer modules, which are in the lockstep synchronism, computer module 200 in this embodiment, to the memory of the computer module to be resynchronized, computer module 100 in this embodiment. In this embodiment, the copy operation utilizes the DMA transmission. The number of the addresses stored in address storing element 701 is less than the number of the entire addresses of the memory. The copy of the data in the present invention based on the addresses stored in address storing element 701 takes less time than the copy of the data of the entire addresses. After the completion of the copy operation, data transmission element 702 resets all computer modules 100, 200 and 300. Subsequent to the reset, all computer modules 100, 200 and 300 are synchronized with the identical or the substantially the same clock signal each other, and start the ordinary execution.

As described above, when monitoring element 700 finds that any computer module is out of the lockstep synchronism, address storing element 701 stores the address or addresses, whose data has possibility to differ from the corresponding data of the other computer modules, of the memory of the computer module which is out of lockstep synchronism. And, during resynchronization, data transmission element 702 copies the data corresponding to the address or addresses stored in address storing element 701 from the memory of the computer module which is in the lockstep synchronism to the memory of the computer module being out of lockstep synchronism. The time to complete the copy of the memory of the resynchronizing computer module is shortened. As a result, it is possible to mount the computer module, which was once out of the lockstep synchronism because of no crucial reason such as the permanent failure, into the fault tolerant computer as early as possible.

In this embodiment, for a purpose of explanation, three computer modules 100, 200 and 300 are provided in the lockstep fault tolerant computer 1. The present invention is not limited to such a particular configuration, and the number of the computer modules may be no less than two.

While this invention has been described in conjunction with the preferred embodiments described above, it will now be possible for those skilled in the art to put this invention into practice in various other manners.

## Claims

1. An information processing apparatus (1) comprising:
first, second and third computer elements (100, 200, 300) which are adapted to execute the same instructions simultaneously in synchronism, and which have first, second and third memory elements (104, 204, 304) respectively;
a monitor element (700) which is adapted to find which one of said computer elements is out of said synchronism;
a copy element (702) which is adapted to copy a part of the data stored in said second memory element to said first memory element when said monitor element finds that said first computer element is out of said synchronism; and
a fourth memory element (701) which is adapted to store information to designate which part of the data stored in said second memory element is copied by said copy element when said monitor element finds that said first computer element is out of said synchronism,
**characterized in that**
said monitor element is adapted to receive address strobes from the first, second and third computer elements during the same cycle in order to determine whether said first computer element is out of said synchronism;
said second computer element comprises a cache and is adapted to execute a cache flash operation writing the data in said cache out to said second memory element;
said information comprises an address or addresses corresponding to said data written from said cache to said second memory element; and
said copy element is adapted to copy only those data which correspond to said address or addresses stored in said fourth memory element.

2. The information processing apparatus as claimed in claim 1, wherein said copy element is activated unless a permanent failure occured in said first computer element.

3. The information processing apparatus as claimed in claim 1 or 2, wherein said monitor element finds that said first computer element is out of said synchronism based on the time in which it receives said address strobes from all of said computer modules.

4. The information processing apparatus as claimed in claim 1 or 2, wherein said monitor element finds that said first computer element is out of said synchronism based on the time in which it receives said address strobes, commands and addresses of requests from all of said computer modules.

5. The information processing apparatus as claimed in any of claims 1 to 4, wherein said information includes an address or addresses of access requests performed since said monitoring element found said first computer element is out of said synchronism.

6. The information processing apparatus as claimed in any of claims 1 to 4, wherein said information indicates the location in said first memory which has possibility of inconsistency with said second memory.

7. The information processing apparatus as claimed in any of claims 1 to 6 wherein said copy element copies said part of data by utilizing a direct memory access transmission.

8. The information processing apparatus as claimed in any of claims 1 to 7, wherein each of the first and second computer elements has at least one processor and a bus connected to said processor; and
the monitor element is connected to said bus.

## Patentansprüche

1. Informationsverarbeitungsvorrichtung (1), die folgendes aufweist:
ein erstes, ein zweites und ein drittes Computerelement (100, 200, 300), die dazu geeignet sind, dieselben Anweisungen gleichzeitig synchron auszuführen, und die jeweils ein erstes, ein zweites und ein drittes Speicherelement (104, 204, 304) haben;
ein Überwachungselement (700), das dazu geeignet ist, herauszufinden, welches der Computerelemente außerhalb der Synchronisation ist;
ein Kopierelement (702), das dazu geeignet ist, einen Teil der im zweiten Speicherelement gespeicherten Daten zum ersten Speicherelement zu kopieren, wenn das Überwachungselement herausfindet, dass das erste Computerelement außerhalb der Synchronisation ist; und
ein viertes Speicherelement (701), das dazu geeignet ist, Information zu speichern, um zu bestimmen, welcher Teil der im zweiten Speicherelement gespeicherten Daten durch das Kopierelement kopiert ist, wenn das Überwachungselement herausfindet, dass das erste Computerelement außerhalb der Synchronisation ist;
**dadurch gekennzeichnet, dass**
das Überwachungselement dazu geeignet ist, Adressenhinweissignale vom ersten, zweiten und dritten Computerelement während desselben Zyklus zu empfangen, um zu bestimmen, ob das erste Computerelement außerhalb der Synchronisation ist;
das zweite Computerelement einen Cache aufweist und dazu geeignet ist, eine Cache-Flashoperation auszuführen, die die Daten im Cache hinaus zum zweiten Speicherelement schreibt;
die Information eine Adresse oder Adressen entsprechend den vom Cache zum zweiten Speicherelement geschriebenen Daten aufweist; und
das Kopierelement dazu geeignet ist, nur diejenigen Daten zu kopieren, die der Adresse oder den Adressen entsprechen, die in dem vierten Speicherelement gespeichert ist oder sind.

2. Informationsverarbeitungsvorrichtung nach Anspruch 1, wobei das Kopierelement aktiviert ist, außer wenn ein permanenter Fehler im ersten Computerelement auftrat.

3. Informationsverarbeitungsvorrichtung nach Anspruch 1 oder 2, wobei das Überwachungselement basierend auf der Zeit, in welcher es die Adressenhinweissignale von allen Computermodulen empfängt, herausfindet, dass das erste Computerelement außerhalb der Synchronisation ist.

4. Informationsverarbeitungsvorrichtung nach Anspruch 1 oder 2, wobei das Überwachungselement basierend auf der Zeit, in welcher es die Adressenhinweissignale, Befehle und Adressen von Anforderungen von allen Computermodulen empfängt, herausfindet, dass das erste Computerelement außerhalb der Synchronisation ist.

5. Informationsverarbeitungsvorrichtung nach einem der Ansprüche 1 bis 4, wobei die Information eine Adresse oder Adressen von Zugriffsanforderungen enthält, die durchgeführt sind, seit das Überwachungselement herausfand, dass das erste Computerelement außerhalb der Synchronisation ist.

6. Informationsverarbeitungsvorrichtung nach einem der Ansprüche 1 bis 4, wobei die Information die Stelle im ersten Speicher anzeigt, die eine Möglichkeit einer Inkonsistenz mit dem zweiten Speicher hat.

7. Informationsverarbeitungsvorrichtung nach einem der Ansprüche 1 bis 6, wobei das Kopierelement den Teil von Daten durch Verwenden einer Direktspeicherzugriffsübertragung kopiert.

8. Informationsverarbeitungsvorrichtung nach einem der Ansprüche 1 bis 7, wobei jedes des ersten und des zweiten Computerelements wenigstens einen Prozessor und einen mit dem Prozessor verbundenen Bus hat; und
das Überwachungselement mit dem Bus verbunden ist.

## Revendications

1. Appareil de traitement d'informations (1) comprenant :
des premier, second et triosième éléments d'ordinateur (100, 200, 300) qui sont adaptés pour exécuter les mêmes instructions simultanément en synchronisme, et qui ont des premier, deuxième et troisième éléments de mémoire (104, 204, 304), respectivement ;
un élément de contrôle (700) qui est adapté pour trouver lequel desdits éléments d'ordinateur est hors dudit synchronisme ;
un élément de copie (702) qui est adapté pour copier une partie des données stockées dans ledit deuxième élément de mémoire vers ledit premier élément de mémoire lorsque ledit élément de contrôle trouve que ledit premier élément d'ordinateur est hors dudit synchronisme ; et
un quatrième élément de mémoire (701) qui est adapté pour stocker une information pour désigner quelle partie des données stockées dans ledit deuxième élément de mémoire est copiée par ledit élément de copie lorsque ledit élément de contrôle trouve que ledit premier élément d'ordinateur est hors dudit synchronisme,
**caractérisé en ce que**
ledit élément de contrôle est adapté pour recevoir des impulsions d'adresse des premier, second et troisième éléments d'ordinateur durant le même cycle afin de déterminer si le premier élément d'ordinateur est hors dudit synchronisme ;
ledit second élément d'ordinateur comprend un cache et est adapté pour exécuter une opération flash de cache en écrivant les données dans ledit cache vers ledit deuxième élément de mémoire ;
ladite information comprend une adresse ou des adresses correspondant auxdites données écrites depuis ledit cache vers ledit deuxième élément de mémoire ; et
ledit élément de copie est adapté pour copier uniquement ces données qui correspondent à ladite adresse ou auxdites adresses stockées dans ledit quatrième élément de mémoire.

2. Appareil de traitement d'informations selon la revendication 1, dans lequel ledit élément de copie est activé à moins qu'une défaillance permanente se soit produite dans ledit premier élément d'ordinateur.

3. Appareil de traitement d'informations selon la revendication 1 ou 2, dans lequel ledit élément de contrôle trouve que ledit premier élément d'ordinateur est hors dudit synchronisme sur la base du temps dans lequel il reçoit lesdites impulsions d'adresse de tous lesdits modules d'ordinateur.

4. Appareil de traitement d'informations selon la revendication 1 ou 2, dans lequel ledit élément de contrôle trouve que ledit premier élément d'ordinateur est hors dudit synchronisme sur la base du temps dans lequel il reçoit lesdites impulsions d'adresse, les commandes et les adresses de requêtes de tous lesdits modules d'ordinateur.

5. Appareil de traitement d'informations selon l'une quelconque des revendications 1 à 4, dans lequel ladite information comprend une adresse ou des adresses de requêtes d'accès effectuées depuis que ledit élément de contrôle a trouvé que ledit premier élément d'ordinateur était hors dudit synchronisme.

6. Appareil de traitement d'informations selon l'une quelconque des revendications 1 à 4, dans lequel ladite information indique l'emplacement dans ladite première mémoire qui a une possibilité d'incohérence avec ladite deuxième mémoire.

7. Appareil de traitement d'informations selon l'une quelconque des revendications 1 à 6, dans lequel ledit élément de copie copie ladite partie de données en utilisant une transmission par accès direct à la mémoire.

8. Appareil de traitement d'informations selon l'une quelconque des revendications 1 à 7, dans lequel chacun des premier et second éléments d'ordinateur a au moins un processeur et un bus connecté audit processeur ; et
l'élément de contrôle est connecté audit bus.
